# EUROPEAN PATENT APPLICATION

(11) **EP 1 940 099 A1**
(43) Date of publication of application: **02.07.2008**
(21) Application number: 07007805.0
(22) Date of filing: 17.04.2007
(51) Int. Cl.: H04L 25/03, H04L 12/28

(54) **System and method for data communication**

(30) Priority: 25.12.2006 JP 2006347848
(71) Applicant: Pacific Industrial Co., Ltd., Ogaki-shi, Gifu-ken 503-8603 (JP)
(72) Inventor: Kawase, Shinichi, Ogaki-shi Gifu-ken, 503-8603 (JP); Okubo, Youichi, Ogaki-shi Gifu-ken, 503-8603 (JP); Tsujita, Yasuhisa, Ogaki-shi Gifu-ken, 503-8603 (JP); Aoyama, Shuji, Niwa-gun Aichi-ken (JP)
(74) Representative: Kramer - Barske - Schmidtchen

(57) **Abstract**

A data communication system includes a terminal identification information adding unit (54, 56) generating a unit carrier wave (D7) including a plurality of periods of a carrier wave and arranging the unit carrier wave (D7) in arrangement patterns differing at every transmission terminal (51, 51R, 70, 70R) to generate a unit carrier row signal (D8) shorter than one bit of the digital transmission data (D1), a transmission timing determination unit (53) detecting a binary inversion timing of the digital transmission data (D1) and causing the terminal identification information adding unit (54, 56) to transmit the unit carrier row signal (D8) every time the binary is inverted, a reception timing distinguishing unit (63-66) generating a reception timing signal (D9) in synchronization with reception of the unit carrier row signal (D8) and collecting the reception timing signal (D9) of the unit carrier row signal (D8) of the same type, and a digital data restoring unit (67) inverting the binary according to the collected reception timing signal (D9), restoring the digital transmission data (D1).

## Description

The present invention relates to a data communication system and a data communication method modulating and demodulating binary multibit serial digital transmission data using carrier waves and transmitting and receiving the data between a plurality of transmission terminals and a plurality of reception terminals.

A time sharing system (TSS) and a digital subscriber line (DSL) are known as conventional systems for data communication with a plurality of transmission terminals being discriminated. For example, JP-A-2000-284800 discloses such a conventional data communication system. JP-A-2003-116186 discloses another conventional data communication system. Furthermore, amplitude shift keying (ASK) and frequency shift keying (FSK) are conventionally known as methods of modulation and demodulation. For example, refer to "Glossary of Technical Terms in Japanese Industrial Standards" 5th edition, compiled and published by Japanese Standards Association, Tokyo on March 30, 2001.

Signal waves transmitted from a transmission terminal are sometimes multireflected on a boundary (such as wall) in a propagation space and a terminal of transmission path, producing a primary reflected wave, secondary reflected wave and so on each of which is shifted by reflective propagation. When modulation and demodulation are carried out by a conventional method of ASK or FSK using a conventional system of TSS or DSL, a regular signal wave is superposed on the primary reflected wave, secondary reflected wave and so on such that it is difficult to discriminate the regular signal wave from the primary reflected wave, secondary reflected wave and so on. As a result, communication interference sometimes occurs. In particular, the communication interference due to the aforesaid multireflection frequently occurs when data communication is carried out through a relatively shorter transmission path such as one in a vehicle.

Therefore, an object of the present invention is to provide a data communication system and a data communication method which can prevent communication interference due to multireflection of signal waves so that better data communication can be performed.

The present invention provides a data communication system modulating and demodulating binary multibit serial digital transmission data using a carrier wave and transmitting and receiving the data between a plurality of transmission terminals and a plurality of reception terminals. The system comprises a terminal identification information adding unit provided in each transmission terminal for generating a unit carrier wave including a predetermined plurality of periods of the carrier wave and arranging the unit carrier wave in arrangement patterns differing at every transmission terminal to generate a unit carrier row signal shorter than one bit of the digital transmission data, a transmission timing determination unit provided in each transmission terminal for detecting a binary inversion timing of the digital transmission data and causing the terminal identification information adding unit to transmit the unit carrier row signal every time the binary is inverted, a reception timing distinguishing unit provided in each reception terminal for generating a reception timing signal in synchronization with reception of the unit carrier row signal and collecting the reception timing signal of the unit carrier row signal of the same type, and a digital data restoring unit provided in each reception terminal for inverting the binary according to the collected reception timing signal of the same type, thereby restoring the digital transmission data.

In the above-described system, each transmission terminal transmits the unit carrier row signal containing identification information thereof in synchronization with inversion of binary of the digital transmission data. In this case, when a plurality of transmission terminals simultaneously carry out data transmission, a plurality of types of unit carrier row signals coexist. On the other hand, the reception terminal generates a reception timing signal every reception timing of the unit carrier row signal, collecting the reception timing signals of the same type of unit carrier row signals. The reception terminal inverts binary according to the same type of reception timing signals collected to restore the digital transmission data. Consequently, the reception terminal can receive the digital transmission data transmitted from a plurality of transmission terminals substantially simultaneously while distinguishing the data for every transmission terminal.

In the above-described arrangement, the digital transmission data is converted to a collection of unit carrier row signals to be transmitted in the communication between the transmission and reception terminals. Each unit carrier row signal is shorter than 1 bit of the digital transmission data. Furthermore, each unit carrier row signal is composed of rowed unit carrier waves. More specifically, the digital transmission data is decomposed into unit carrier waves each of which is highly shorter than 1 bit of transmission data, to be transmitted. Consequently, when the unit carrier waves are multireflected thereby resulting in generation of primary reflected wave, secondary reflected wave and so on, normal unit carrier waves can readily be distinguished from the reflected waves. Accordingly, the above-described arrangement can prevent communication interference due to multireflection of signal waves so that better data communication can be performed.

The reception terminals may be responsive to digital transmission data from a plurality of transmission terminals. Alternatively, the reception terminals may be responsive to the digital transmission data from only predetermined transmission terminals out of a plurality of transmission terminals, while the digital transmission data from the other transmission terminals may be ignored or discarded.

Research made by the inventor reveals that when the unit carrier wave is propagated to a transmission path in a vehicle, the reflected wave can be attenuated to such a level that the reflected wave can be distinguished from the normal unit carrier wave when an interval between the unit carrier waves is 20 ns. In contrast, better data communication can be performed in a vehicle when each unit carrier wave has a length which is less than 20 ns and an interval between the unit carrier waves is not less than 20 ns.

In a preferred embodiment, the transmission terminals and the reception terminals are mounted in a vehicle. Furthermore, a transmission side opposed conductive member is disposed in the transmission terminal so as to be opposed to a vehicle ground. A reception side opposed conductive member is disposed in the reception terminal so as to be opposed to the vehicle ground. The transmission terminal applies voltage between the transmission side opposed conductive member and the vehicle ground and changes the voltage according to information to be transmitted, thereby changing an electric field produced over a whole surface of the vehicle ground. This arrangement changes the potential difference between the reception side opposed conductive member and the vehicle ground. Each reception terminal can obtain information from the electric field based on the change in the potential difference. Thus, the above-described data communication system uses the vehicle ground as a transmission path but not electric waves in order to carry out data communication between the transmission terminal and the reception terminal both of which are located at two positions spaced away from each other in the vehicle ground respectively. Consequently, radio disturbance can be suppressed, and power consumption can be reduced. Furthermore, since radio waves need not be radiated into the air, data communication can be realized by use of lower frequencies than in the conventional arrangements.

Furthermore, in another preferred embodiment, the unit carrier row signals may be transmitted and received between the transmission terminals and reception terminals by a time sharing system in order that interference may reliably be prevented between the unit carrier row signals.

Additionally, in further another preferred embodiment, the unit carrier waves may be propagated to a power supply line in a vehicle so that the unit carrier waves are transmitted and received. Consequently, space can be saved in this case as compared with the case where a communication line is separately provided. In this case, one of output electrodes of a direct current power supply circuit provided in the vehicle is connected to a vehicle ground, and the other of the output electrodes of the DC power supply circuit is connected to the power supply line. Consequently, space saving can further be achieved as compared with the case where paired positive and negative output electrodes are connected to paired positive and negative power supply lines respectively.

The invention will be described, merely by way of example, with reference to the accompanying drawings, in which:
FIG. 1 is a conceptual rendering of a vehicle provided with a data communication system of a first embodiment in accordance with the present invention;
FIG. 2 is a conceptual rendering of a transmission terminal;
FIG. 3 is a conceptual rendering of a reception terminal;
FIG. 4 is a conceptual rendering of a transmission and reception terminal;
FIG. 5 is a timing diagram showing a structure of digital transmission data and the like;
FIG. 6 is a timing diagram showing the case where a plurality of pieces of data are transmitted;
FIG. 7 is a conceptual rendering of a vehicle provided with a data communication system of a second embodiment in accordance with the present invention;
FIG. 8 is a conceptual rendering of a transmission terminal in the second embodiment;
FIG. 9 is a conceptual rendering of a reception terminal in the second embodiment;
FIG. 10 is a circuit diagram showing a high impedance filter;
FIG. 11 is a conceptual rendering of a vehicle provided with a data communication system of a third embodiment in accordance with the present invention;
FIG. 12 is a conceptual rendering of an electric field relay device;
FIG. 13 is a waveform chart showing waveforms transmitted from the transmission terminal and measured in a first example;
FIG. 14 is a waveform chart showing waveforms received by a reception terminal; and
FIG. 15 is a timing diagram showing a structure of digital transmission data etc. in a modified form.

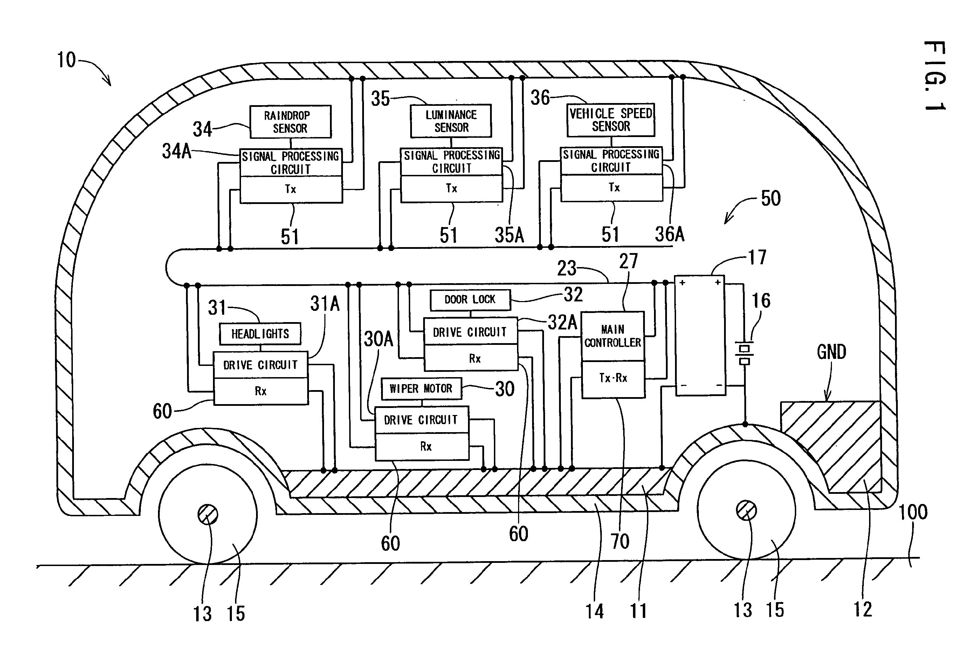

A first embodiment of the present invention will be described with reference to FIGS. 1 to 6. A data communication system of the embodiment is provided in a vehicle. Referring to FIG. 1, a vehicle 10 includes a chassis 11, an engine 12, axles 13, a vehicle housing body 14 and the like, all of which are conductive components. These conductive components are rendered conductive, thereby composing a vehicle ground GND. The vehicle ground GND is insulated from a ground 100 by tires 15.

The vehicle 10 is provided with a direct current (DC) power supply circuit 17 having positive and negative output electrodes. The negative output electrode of the DC power supply circuit 17 is connected to the vehicle ground GND. The positive output electrode of the DC power supply circuit 17 is connected to a power supply line 23. The DC power supply circuit 17 further has a pair of input electrodes to which positive and negative electrodes of a battery 16 are connected. The negative electrode of the battery 16 is also connected to the vehicle ground GND. The DC power supply circuit 17 transforms output of the battery 16 to a predetermined voltage, delivering the voltage between the power supply line 23 and the vehicle ground GND.

Drive circuits 30A, 31A and 32A are connected in parallel with one another between the power supply line 23 and the vehicle ground GND. The drive circuits 30A, 31A and 32A are provided for actuating a wiper motor 30, headlights 31, a door lock 32 and the like, respectively. The wiper motor 30, headlights 31, the door lock 32 and the like are driven when an operation switch provided in a main controller 27 is operated or when the main controller 27 delivers control signals to the respective drive circuits 30A, 31A, 32A according to results of detection by a raindrop sensor 34, a luminous intensity sensor 35, a vehicle speed sensor 36, etc. Transmission terminals 51 are provided in signal processing circuits 34A, 35A and 36A of the sensors 34, 35 and 36 in order that the signals may be transmitted or received, respectively. Reception circuits 60 are provided in the drive circuits 30A, 31A and 32A respectively. A transmission and reception terminal 70 is provided in the main controller 27. The transmission terminals 51, the reception terminals 60 and the transmission and reception terminal 70 constitute a data communication system 50 of the invention.

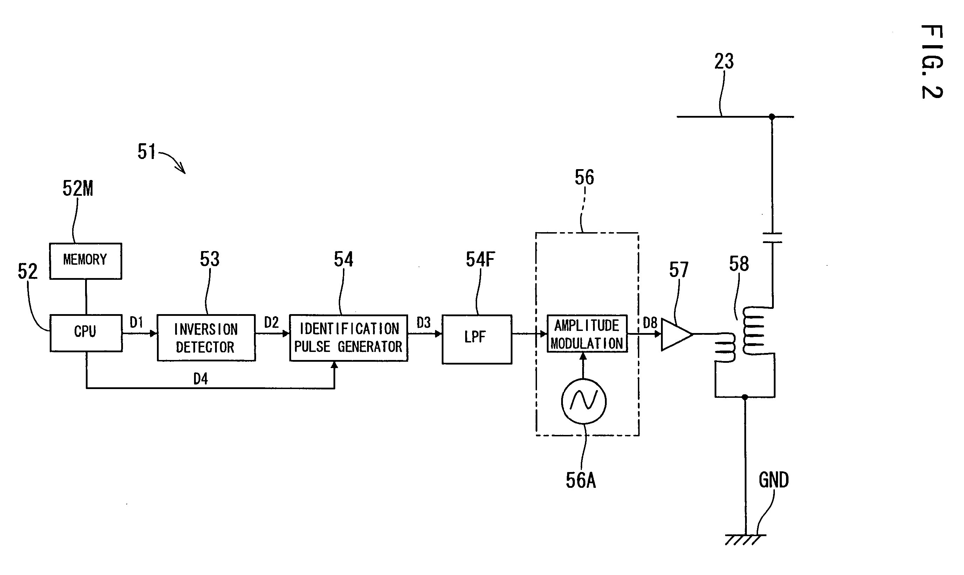

Referring to FIG. 2, each transmission terminal 51 includes a central processing unit (CPU) 52, an inversion detector 53, an identification pulse generator 54 and an amplitude modulator 56. In the embodiment, the identification pulse generator 54 and the amplitude modulator 56 constitute a terminal identification information adding unit in the invention. The inversion detector 53 serves as a transmission timing determining section in the invention.

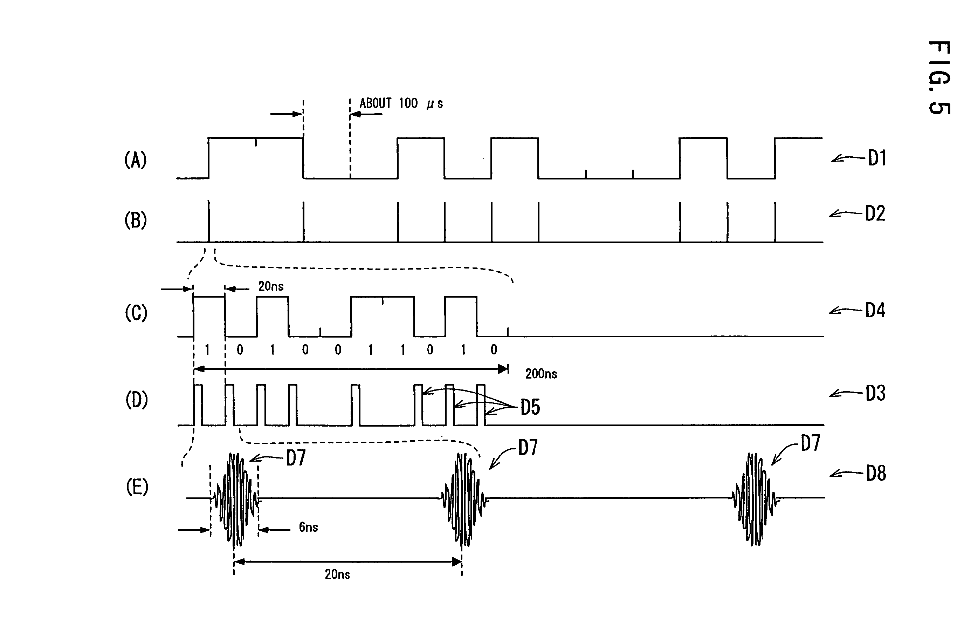

The CPU 52 adds control information and the like to serial digital transmission data D1 with a plurality of bits composed of binary of "1" and "0" as shown in FIG. 5A, transmitting the data D1. In the embodiment, 1 bit length of the digital transmission data D1 is set to about 100 µs.

The inversion detector 53 of the transmission terminal 51 as shown in FIG. 2 detects an inversion timing of "1" and "0" or an edge of the digital transmission data D1 delivered by the CPU 52, thereby delivering an inversion timing signal D2 as shown in FIG. 5B.

The inversion timing signal D2 as shown in FIG. 5B triggers the identification pulse generator 54 to deliver an identification pulse train D3 as shown in FIG. 5D. Each transmission terminal 51 includes a memory 52M (see FIG. 2) on which a terminal identification code for identifying each transmission terminal is stored. The CPU 52 transforms the terminal identification code to 10-bit serial identification data D4 and supplies the data D4 to the identification pulse generator 54 as shown in FIG. 5C. In this case, the ID data D4 has 1-bit length of 20 ns, for example, and an overall length of about 200 ns. When having received the ID data D4, the identification pulse generator 54 generates a detection pulse D5 with a pulse width of, for example, 6 ns in synchronization with the inversion of "1" and "0" of ID data D4 (or the edge), generating the aforesaid identification pulse train D3 (see FIG. 5D) from a plurality of detection pulses D5 corresponding to the whole ID data D4.

A low-pass filter 54F as shown in FIG. 2 limits the identification pulse train D3 to a band of 150 MHz, for example. As a result, each of the detection pulses D5 composing the identification pulse train D3 has a pulse width of 6 ns.

The amplitude modulator 56 acquires the identification pulse train D3 having passed through the low-pass filter 54F, amplitude-modulating the identification pulse train D3 using a carrier wave delivered by an oscillation circuit 56A and having a predetermined frequency (520 to 680 MHz, for example). As a result, the carrier wave is divided into a plurality of unit carrier waves D7 each of which has a pulse width of 6 ns corresponding to the width of detection pulse D5 as shown in FIG. 5E. The unit carrier waves D7 are aligned to serve as a unit carrier row signal D8. The unit carrier row signal D8 is delivered as a voltage signal between the power supply line 23 and the vehicle ground GND through a buffer circuit 57 and an output circuit 58.

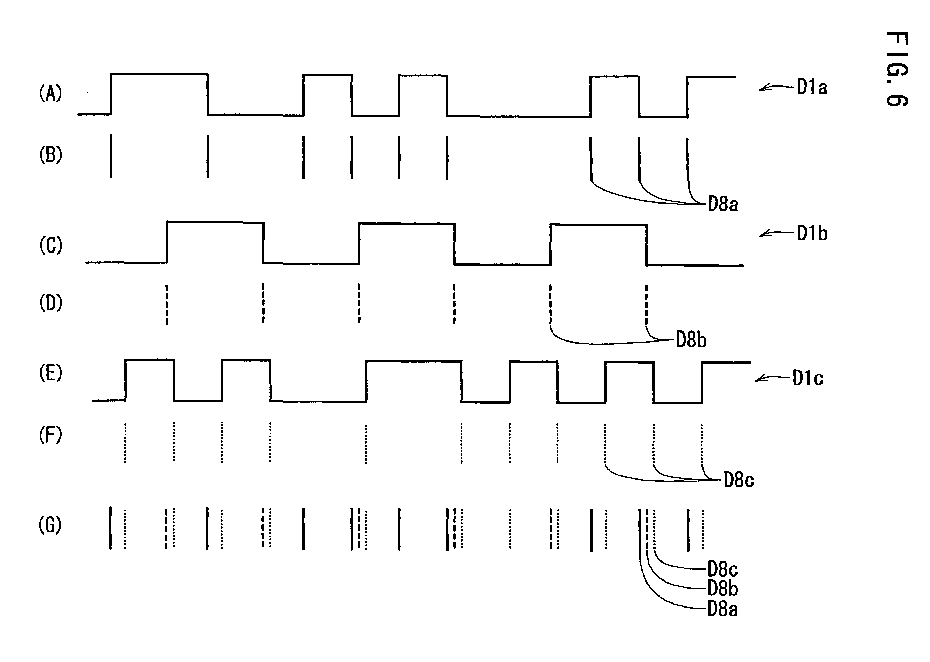

The data communication system 50 of the embodiment is designed to transmit the unit carrier row signals D8 from a plurality of transmission terminals 51 by the time sharing system (TSS) in synchronization with the terminals 51, 60 and 70. More specifically, as shown in FIGS. 6A, 6C and 6E in contrast to one another, the CPUs 52 of a plurality of transmission terminals 51 deliver digital transmission data D1 with output timing shifted for more than a predetermined time of 200 ns. Accordingly, the binary inversion sections (edges) of digital transmission data D1a, D1b and D1c delivered by the respective first to third transmission terminals 51 also shift from one another. Consequently, as shown in contrast by FIGS. 6B, 6D and 6F, the unit carrier row signals D8a to D8c delivered by the first to third transmission terminals 51 are shifted from one another. As shown in FIG. 6G, even if the first to third transmission terminals 51 simultaneously deliver the unit carrier row signals D8a to D8c respectively, the unit carrier row signals D8a to D8c can reliably be prevented from superimposition.

In the transmission terminal 51 of the embodiment, the digital transmission data D1 having 1-bit length of about 100 µs delivered by the CPU 52 is rendered a group of unit carrier row signals D8. The group has a data length of 200 ns. Since the output timing of each unit carrier row signal D8 is an integral multiple of 100 µs, the time occupancy of each unit carrier row signal D8 relative to the whole data length of the digital transmission data D1 can be reduced to 1/500. As a result, when for example, 50 pairs of transmission and reception terminals communicate simultaneously without use of the TSS, the unit carrier row signal D8 of one terminal identification code is detected (Carrier Detection, CD) while the power supply line 23 is being monitored. Subsequently, the unit carrier row signal D8 of self terminal identification code is declared so that interference of transmission data by a plurality of transmission terminals 51 can be avoided.

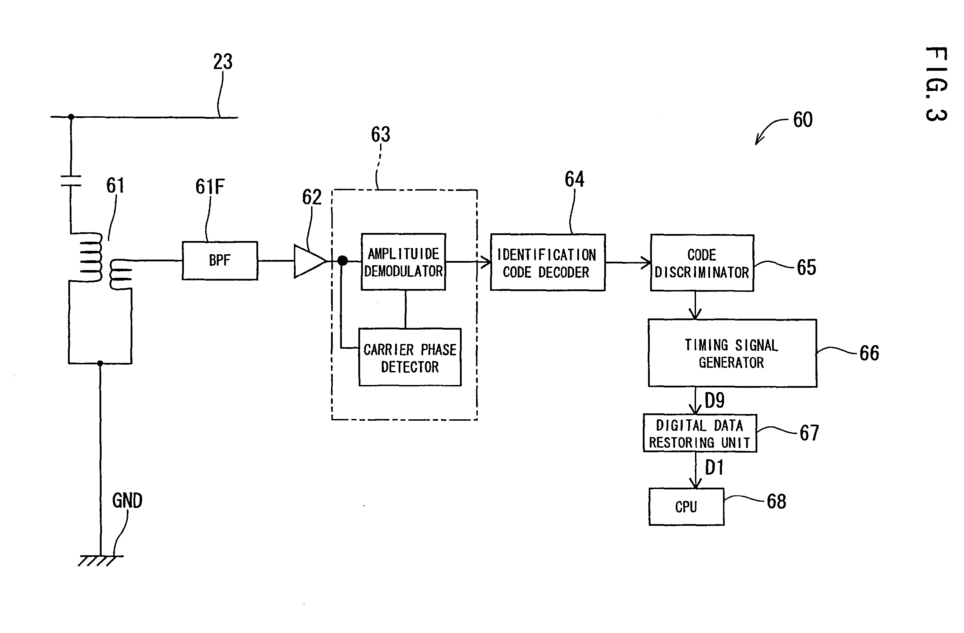

FIG. 3 shows the arrangement of the reception terminal 60. The reception terminal 60 includes an amplitude demodulator 63, an identification code decoder 64, a code discriminator 65, a timing signal generator 66, a digital data restoring unit 67 and a central processing unit (CPU) 68. The identification code decoder 64, the code discriminator 65 and the timing signal generator 66 constitute a reception timing discriminating unit in the invention.

In the reception terminal 60, the unit carrier row signal D8 propagating to the power supply line 23 is matched by a transformer (not shown) of a receiving circuit 61. A frequency band of the unit carrier row signal D8 is limited by a band-pass filter 61F and the signal D8 is amplified by an amplifier 62, thereafter being loaded into the amplitude demodulator 63. The amplitude demodulator 63 detects a phase of the unit carrier wave D7 at a frequency of amplitude modulation (520 to 680 MHz) contained in the loaded unit carrier row signal D8. The amplitude demodulator 63 amplitude-demodulates the unit carrier row signal D8 based on the detected phase, generating the identification pulse train D3.

The amplitude demodulator 63 amplitude-demodulates the loaded unit carrier row signal D8 as a normal unit carrier wave D7 when an amplitude level and data length are at or above respective predetermined reference values. Otherwise, the loaded unit carrier row signal D8 is discarded as reflected waves or noise. The unit carrier wave D7 may be synchronized between predetermined one of the transmission terminals 51 and predetermined one of the reception terminals 60. In this case, the phase of the unit carrier wave D7 normally synchronized may be compared with the phase of the actually detected unit carrier wave D7. Data may be discarded when the phases vary from reference values to a large degree.

The identification code decoder 64 decodes an identification code contained in the identification pulse train D3. Suppose now the case where the reception terminal 60 is set to process only signals delivered from predetermined one of the transmission terminals 51. In this case, when the identification code decoder 64 of the reception terminal 60 confirms that the identification code is information directed to own reception terminal 60 and a time interval is normal (the time interval is 14.2857 µs when the ID data D4 of the aforesaid identification code is 70 kbps, for example.) When these conditions are met, the received data is supplied to the code discriminator 65. When the conditions are not met, data is discarded. On the other hand, when the reception terminal 60 is set so as to process signals delivered from a plurality of transmission terminals 51, the identification code decoder 64 of such reception terminal 60 supplies all the received data of a plurality of types of identification codes to the code discriminators 65.

The code discriminator 65 collects identification pulse train D3 for every same identification code, generating a group of pulse trains composed of the same type of identification pulse trains D3 aligned. The timing signal generator 66 generates a reception timing signal D9 (see FIG. 3) which corresponds to, for example, a starting position of all the identification pulse trains D3 contained in the pulse train group. The reception timing signal D9 is the same as the inversion timing signal D2 as shown in FIG. 5B. The digital data restoring unit 67 inverts the binary of "1" and "0" for every reception timing signal D9, thereby restoring the digital transmission data D1 (see FIG. 5A) .

The digital transmission data D1 thus restored is loaded into the CPU 68 together with the terminal identification code decoded by the identification code decoder 64. As a result, the CPU 68 of the reception terminal 60 can obtain control information together with the terminal identification information as to which transmission terminal 51 or transmission and reception terminal 70 the digital transmission data D1 came from and carry out processing for response to the information.

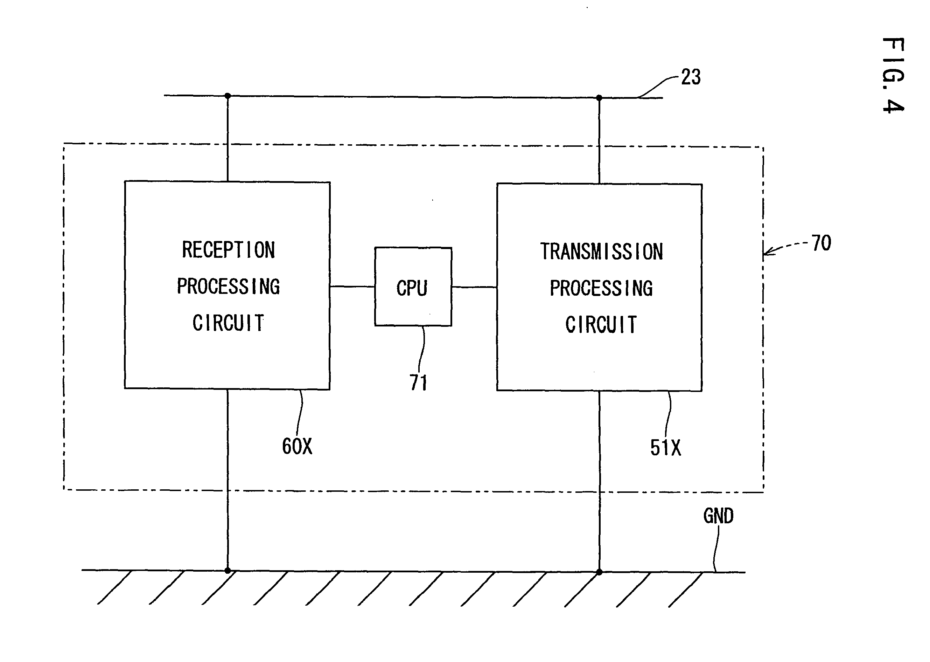

The transmission and reception terminal 70 comprises a transmission processing circuit 51X having the same structure as the above-described transmission terminal 51 and a reception processing circuit 60X having the same structure as the above-described reception terminal 60 as shown in FIG. 4. A CPU 71 serves both for the transmission processing circuit 51X and for the reception processing circuit 60X.

The following will describe the operation and advantages of the data communication system 50. Upon drive of the vehicle 10, the vehicle speed sensor 36 constantly detects a running speed of the vehicle. The results of detection are indicated by a speedometer (not shown) of the vehicle. Furthermore, when the headlights 31 are set so as to be automatically turned on, the luminous intensity sensor 35 detects ambient darkness, turning on the headlights 31 automatically. In these cases, the results of detection by the vehicle speed sensor 36 and the luminous intensity sensor 35 are to be transmitted by the signal processing circuits 36A and 35A respectively.

More specifically, the CPU 52 of the transmission terminal 51 related to the vehicle speed sensor 36 delivers digital transmission data D1 containing information about vehicle speed. The unit carrier row signal D8 containing an identification code of the transmission terminal 51 is delivered by the transmission terminal 51 to the power supply line 23 in synchronization with inversion of binary composing the digital transmission data D1. Furthermore, the CPU 52 of the transmission terminal 51 related to the luminous intensity sensor 35 delivers digital transmission data D1 containing information about luminous intensity. The unit carrier row signal D8 containing an identification code of the transmission terminal 51 is delivered by the transmission terminal 51 to the power supply line 23 in synchronization with inversion of binary composing the digital transmission data D1. Other transmission terminals 51 including the transmission and reception terminal 70 functioning as transmission terminal 51 also constantly deliver the unit carrier row signals D8 containing necessary information.

The reception terminals 60 (including the transmission and reception terminal 70 functioning as the reception terminal 60) constantly load signals transmitted to the power supply line 23. When a plurality of transmission terminals 51 simultaneously carry out signal transmission, a plurality of types of unit carrier row signals D8a, D8b, D8c, ··· coexist as shown in FIG. 6G. On the other hand, after reception of the unit carrier row signal D8, each reception terminal 60 determines the reception timing for every same type of unit carrier row signal D8. In other words, each reception terminal 60 collects the reception timing signal D9 for every same type of unit carrier row signal D8. The binary is inverted according to the reception timing so that each digital transmission data D1 is restored. As a result, each reception terminal 60 can distinctly process information from each of a plurality of transmission terminals 51.

The transmission and reception terminal 70 of the main controller 27 functioning as the reception terminal 60 receives the digital transmission data D1 from the luminous intensity sensor 35 and the digital transmission data D1 from the vehicle speed sensor 36 simultaneously, for example. The main controller 27 controls a speedometer (not shown) so that the vehicle speed is displayed and delivers a command to turn on the headlights 31. Digital transmission data D1 containing information about turn-on command is then converted to the unit carrier row signal D8, which is transmitted. The reception terminal 60 provided in a drive circuit 31A for the headlights 31 receives the transmitted unit carrier row signal D8. A switch (not shown) of the drive circuit 31A is turned on so that the headlights 31 are lighted.

According to the data communication system 50 of the embodiment, data communication can be carried out simultaneously between a plurality of transmission terminals 51 and the reception terminal 60. The digital transmission data D1 is composed of a group of unit carrier row signals D8 on the transmission path (power supply line 23) between each transmission terminal 51 and the reception terminal 60. Each unit carrier row signal D8 is shorter than 1 bit of the digital transmission data D1. Furthermore, each unit carrier row signal D8 is composed of rowed unit carrier waves D7 each of which is shorter than the row signal D8. More specifically, the digital transmission data D1 is decomposed into unit carrier waves D7 each of which is highly shorter than 1 bit of transmission data and which are to be transmitted. Consequently, when the unit carrier waves D7 are multireflected thereby resulting in generation of primary reflected wave, secondary reflected wave and so on, normal unit carrier waves D7 can readily be distinguished from the reflected waves. As also can be confirmed in another embodiment described below, each unit carrier wave D7 has a width which is less than or equal to 20 ns and an interval between the unit carrier waves D7 is not less than 20 ns. As a result, the reflected wave can be distinguished from the normal unit carrier wave D7. Accordingly, the above-described system 50 can prevent communication interference due to multireflection of signal waves so that better data communication can be performed.

Furthermore, in the foregoing embodiment, the detection pulse D5 of 6 ns, which can be regarded as an impulse signal, is further amplitude-modulated. It can be considered that the detection pulse D5 would be delivered to the power supply line 23 as a single-shot impulse signal. However, since frequency components contained in the single-shot impulse signal of 6 ns range from DC to 150 MHz, multireflection due to discontinuity of the chassis 11 unavoidably results in frequency dip. Furthermore, in a relatively lower frequency range between DC to 150 MHz, propagation loss is hard to reduce, and reflected waves return forcefully thereby being added to normal transmission waves. On the other hand, in the embodiment, the 6-ns detection pulse D5, which can be regarded as an impulse signal, is amplitude-modulated, for example, in a range from 520 to 680 MHz. Accordingly, attenuation of reflected waves can be promoted at an early time. Consequently, frequency dip due to multireflection can be reduced. With this effect, the vehicle ground GND can be used as the transmission path. Furthermore, when the power supply line 23 and the vehicle ground GND are used as a transmission path, space saving can be achieved as compared with the case where a communication line is separately provided. Additionally, the result of an experiment can confirm that data communication can desirably be carried out in the frequency range from 520 to 680 MHz in the case of general vehicles.

Jamming impulse is contained in metal wires including the power supply line 23 and control line of the body 10 and the vehicle housing body 14. The jamming impulse results from repeated on-off operation of an electric motor, ignition system, solenoid, relay or the like through each of which large current flows. The jamming impulse is a ringing impulse with a width ranging from 0.5 to several µs and has a long repetition frequency ranging from several tens to several hundreds µs (or merely one impulse). However, the jamming impulse superimposed on the power supply line 23 of the vehicle 10 is distributed in a broad frequency range. This means that a frequency filtering function cannot avoid communication error no matter what frequency band is employed in a transmission system using communication through the vehicle body. It has conventionally been considered that data should be transmitted at a frequency rate lower than a lowest frequency contained in the jamming impulse for the purpose of avoidance of transmission error. However, this results in a bottleneck that the data transmission speed needs to be equal to or below 1 kbps.

According to the above-described data communication system 50 of the embodiment, a plurality of unit carrier waves D7 are arranged in the predetermined arrangement pattern to serve as the unit carrier row signal D8. Consequently, the waveform of the unit carrier row signal D8 can readily be distinguished from waveforms of jamming impulse, whereupon the transmission error can be rendered minimum. Furthermore, generation of the unit carrier row signal D8 is desynchronized with respect to occurrence of jamming impulse. Accordingly, when phases of the unit carrier row signals D8 are synchronized and phases of carrier frequencies in the modulation of the unit carrier waves D7 are synchronized, the unit carrier row signal D8 can readily be distinguished from the jamming impulse. Additionally, an adverse effect of the jamming impulse can further be reduced when data transmission is established between the transmission terminals 51 and the reception terminal 60 while the master and the slave handshake by bidirectional protocol.

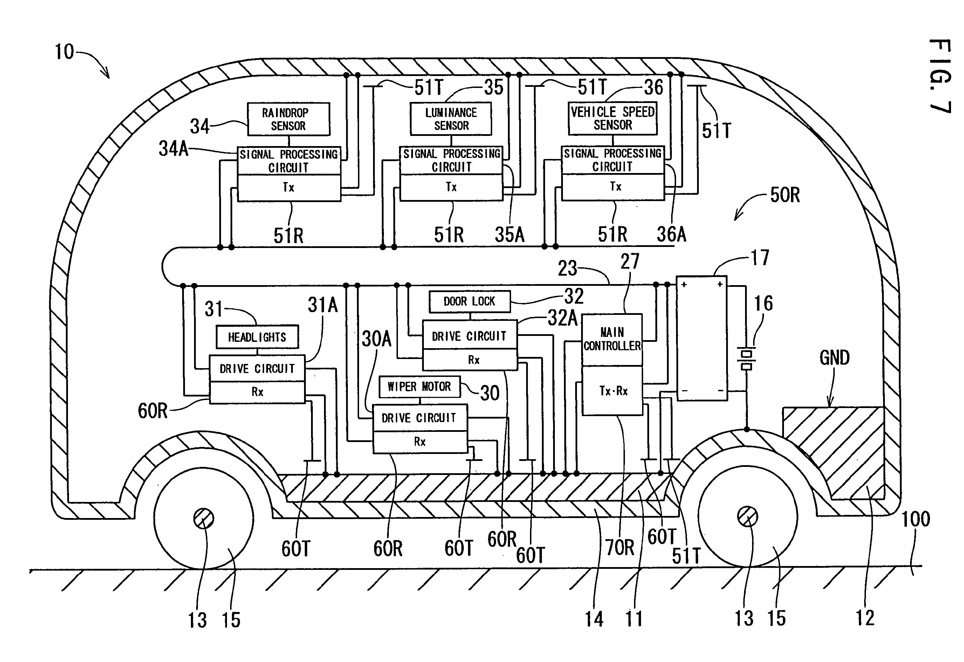

FIGS. 7 to 10 illustrate a data transmission system 50R of a second embodiment of the invention. The second embodiment differs from the first embodiment in the principle of transmission of the unit carrier row signal D8. More specifically, each transmission terminal 51R generates an electric field in the vicinity of the surface of the vehicle ground GND so as to change according to the unit carrier row signal D8. A reception terminal 60R receives the unit carrier row signal D8 based on the change in the electric field.

In the second embodiment, identical or similar parts are labeled by the same reference symbols as those in the first embodiment. The description of these parts will be eliminated and only the difference of the second embodiment from the first embodiment will be described.

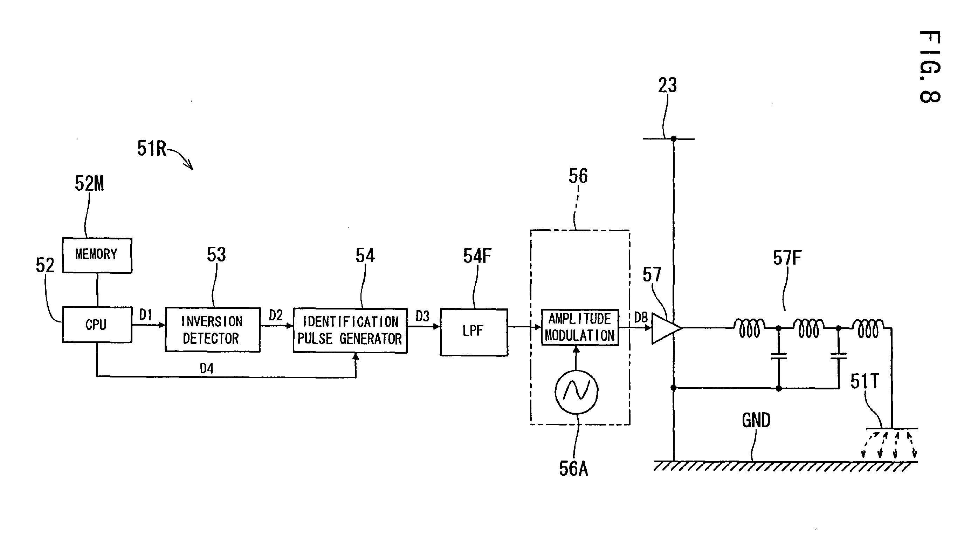

Referring to FIG. 7, each transmission terminal 51R is provided with an opposed electrode plate 51T which serves as a transmission side opposed conductive member in the invention. The opposed electrode plate 51T is connected via a low-pass filter 57F to an output of a buffer circuit 57 of the transmission terminal 51R as shown in FIG. 8. The opposed electrode plate 51T is disposed so as to be opposed to the vehicle ground GND in an insulated relation to the vehicle ground GND. Upon actuation of the transmission terminal 51R, voltage according to the amplitude of the unit carrier row signal D8 is applied between the opposed electrode plate 51T and the vehicle ground GND.

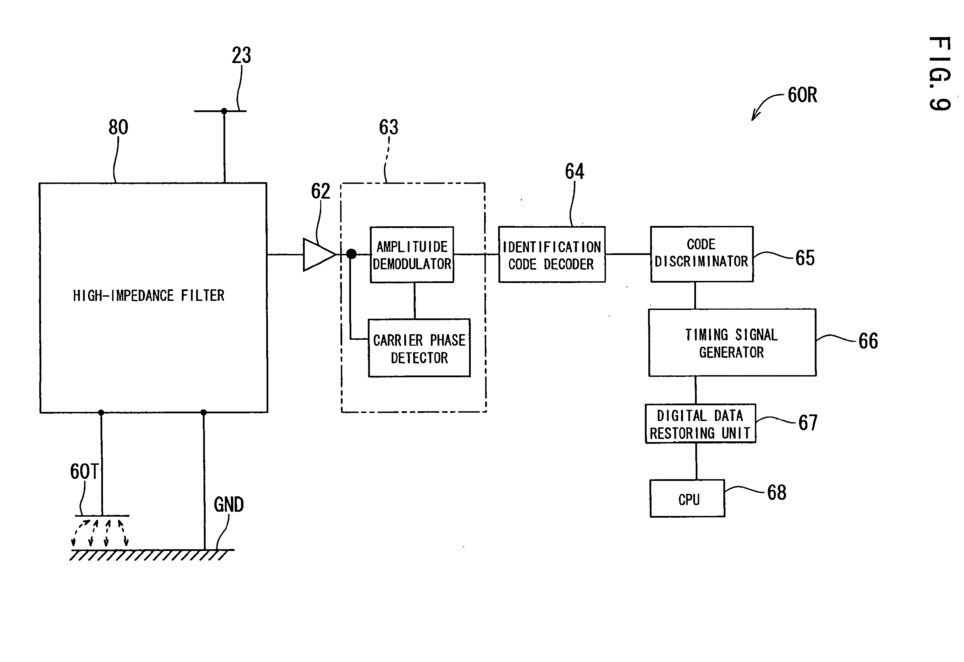

Referring further to FIG. 7, each reception terminal 60R is provided with an opposed electrode plate 60T which serves as a reception side opposed conductive member in the invention. The opposed electrode plate 60T is connected via a high-impedance filter 80 to an input of an amplifier 62 of the reception terminal 60R as shown in FIG. 9. The opposed electrode plate 60T is also disposed so as to be opposed to the vehicle ground GND in an insulated relation to the vehicle ground GND.

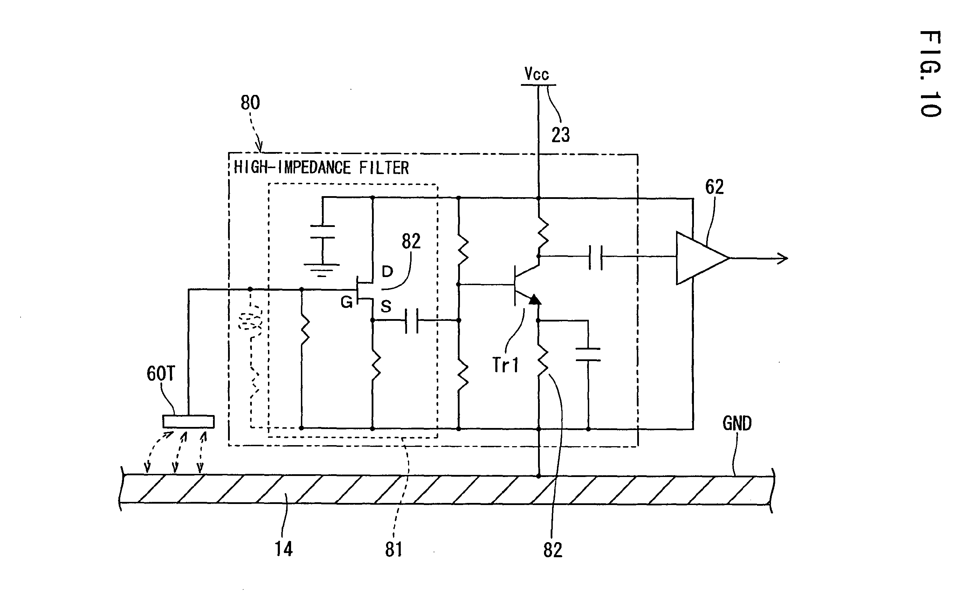

The high-impedance filter 80 includes a voltage follower circuit 81 provided at the input side as shown in FIG. 10. This voltage follower circuit 81 serves a source follower circuit of a junction field effect transistor FET82 (hereinafter referring as FET82). The FET 82 has a source to which the vehicle ground GND is connected and a gate to which the opposed electrode plate 60T is connected. In other words, a potential difference between the opposed electrode plate 60T and the vehicle ground GND is supplied to the voltage follower circuit 81. An input impedance of the reception terminal 60R is raised as the result of provision of the voltage follower circuit 81. Accordingly, even when a potential difference occurs between the opposed electrode plate 60T and the vehicle ground GND, current which possibly flows therebetween becomes extremely small. As a result, information can be obtained from the electric field without reduction in the potential difference produced by the electric field. Furthermore, output of the voltage follower circuit 81 is supplied via an amplifier 62 to an amplitude demodulator 63.

Additionally, a transmission and reception terminal 70R is structured so as to have a transmission circuit corresponding to the transmission terminal 51R and a reception circuit corresponding to the reception terminal 60R.

According to the arrangement of the second embodiment, each transmission terminal 51R applies voltage between the vehicle ground GND and the opposed electrode plate 51T. The applied voltage is according to the amplitude of the unit carrier row signal D8. As the result of the aforesaid voltage application, an electric field is established around the whole vehicle ground GND. The reception terminal 60R can receive the unit carrier row signal D8 based on the change in the electric field. Thus, since data communication is carried out by utilizing the electric field established around the whole vehicle ground GND. Consequently, data communication can be realized by employment of lower current as compared with the case where electric wave propagated in the space is used, whereupon electric power consumption can be reduced. Furthermore, since the communicable coverage is limited to the inside of the inner peripheral wall of the vehicle ground GND, occurrence of radio disturbance can be prevented without provision of electromagnetic shield. Furthermore, since the vehicle ground GND of the vehicle 10 is utilized as the propagation path, new communication cables need not be provided and the data communication system can be installed readily.

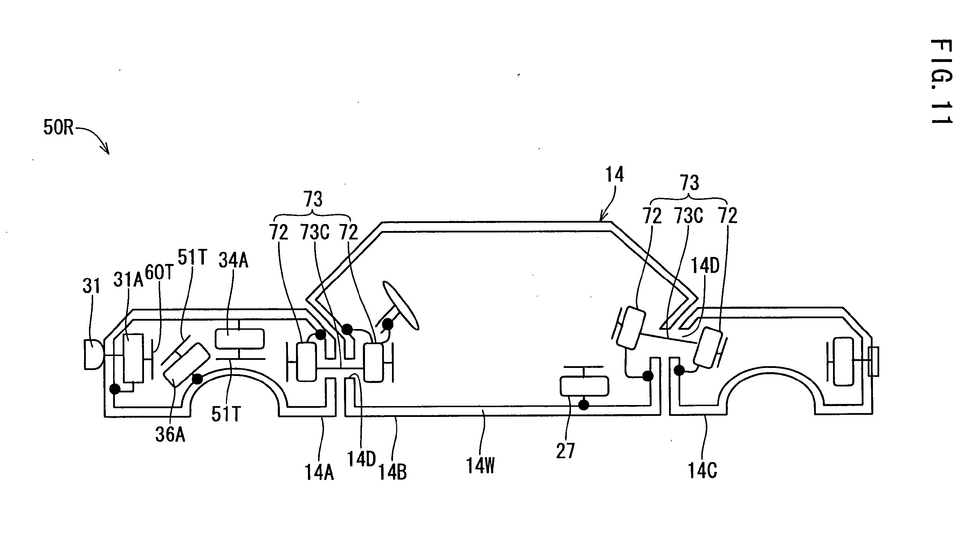

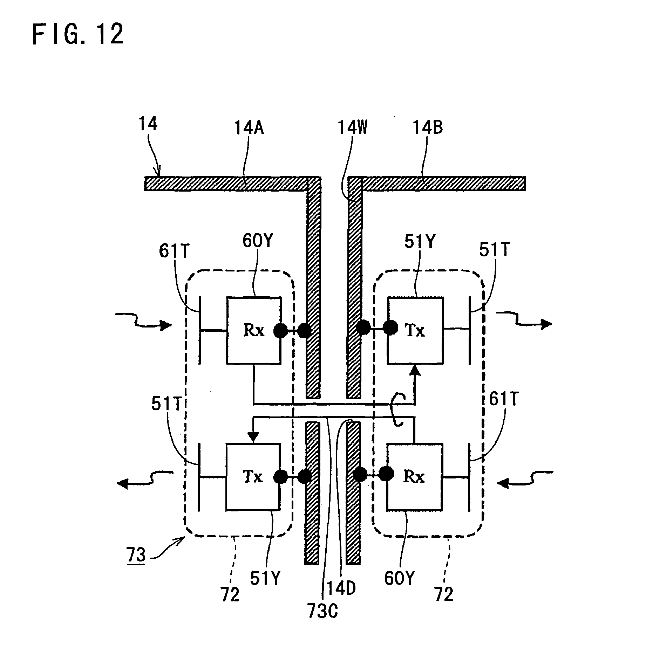

FIGS. 11 and 12 illustrate a data communication system 50R of a third embodiment. In the third embodiment, the data communication system of the second embodiment is improved according to the structure of the vehicle 10.

A vehicle housing body 14 of the vehicle 10 is divided into an engine compartment 14A, a passenger compartment 14B and a trunk 14C by a metal wall 14W as shown in FIG. 11. In particular, the whole engine compartment 14A and the whole trunk 14C are covered by the metal wall 14W such that the interior of each compartment is shielded. Accordingly, it is difficult to transmit an electric field signal generated in the passenger compartment 14B into the engine compartment 14A and the trunk 14C. In view of this problem, two electric field relay devices 73 are provided between the engine compartment 14A and the passenger compartment 14B and between the passenger compartment 14B and the trunk 14C respectively. Each electric field relay device 73 serves as a radio relay device in the invention. As the result of provision of the electric field relay devices 73, data communication can be carried out between two locations in any compartment in the vehicle housing body 14 using the electric field.

More specifically, as shown in FIG. 12, each electric field relay device 73 comprises a pair of relay terminals 72 connected to each other by a relay cable 73C. Each relay terminal 72 includes a transmission processing circuit 51Y having the same structure as the transmission terminal 51Y described in the second embodiment and a reception processing circuit 60Y having the same structure as the reception terminal 60R described in the second embodiment. The relay cable 73C connects the transmission processing circuit 51Y of the first relay terminal 72 and the reception processing circuit 60Y of the second relay terminal 72. The relay cable 73C further connects the transmission processing circuit 51Y of the second relay terminal 72 and the reception processing circuit 60Y of the first relay terminal 72 to each other. As a result, the electric field signal received by the reception processing circuit 60Y of the first relay terminal 72 can be transmitted from the transmission processing circuit 51Y of the second relay terminal 72. Furthermore, the electric field signal received by the reception processing circuit 60Y of the second relay terminal 72 can be transmitted from the transmission processing circuit 51Y of the first relay terminal 72.

The paired relay terminals 72 constituting one electric field relay device 73 are disposed in the engine compartment 14A and the passenger compartment 14B respectively. The electric field relay device 73 is inserted through a communication hole 14D formed through the metal wall 14W dividing the engine and passenger compartments 14A and 14B. In the same manner, the paired relay terminals 72 constituting the other electric field relay device 73 are disposed in the passenger compartment 14B and the trunk 14C respectively. The electric field relay device 73 is inserted through a communication hole 14D formed through the metal wall 14W dividing the passenger compartment 14B and the trunk 14C. As a result, data communication can be carried out using the electric field signal between the transmission terminal 51R and the reception terminal 60R, between the transmission terminal 51R and the transmission and reception terminal 70R or between the reception terminal 60R and the transmission and reception terminal 70R between any two of the engine compartment 14A, the passenger compartment 14B and the trunk 14C.

### [Example 1]

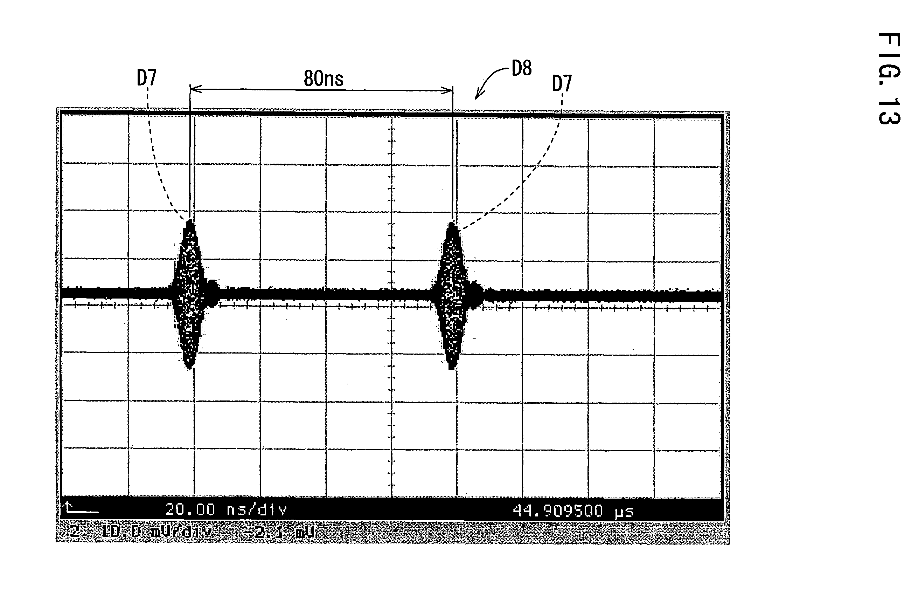

The transmission terminal 51 of the first embodiment was made, and digital serial data "0011110000" with 1-bit length of 20 ns was generated as the ID data D4 in the first embodiment. The detection pulse D5 with the width of 6 ns was generated twice in synchronization with inversion of "0" and "1" of the ID data D4. A pulse train comprising two detection pulses D5 was generated as the identification pulse train D3 of the first embodiment. The pulse train D3 was amplitude-modulated at 550 MHz so that the unit carrier row signal D8 comprising two unit carrier waves D7. The waveform of the unit carrier row signal D8 was measured at an output of the transmission terminal 51. FIG. 13 shows the results of the measurement.

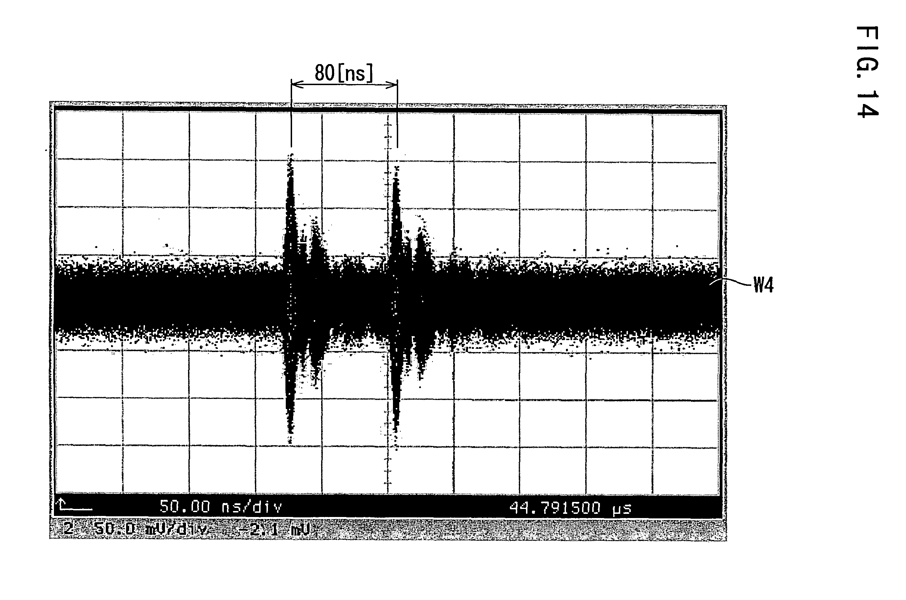

The aforesaid unit carrier row signal D8 was applied as a voltage signal between a power supply line and a vehicle ground of an actual vehicle (passenger motor car). The waveform of voltage applied between the power supply line and the vehicle ground at a distance was measured. FIG. 14 shows the results of the measurement.

Since the above-mentioned ID data D4, "0011110000" has the 1-bit length of 20 ns, an interval between the edges is 80 ns and appears as an interval of 80 ns between a pair of unit carrier waves D7 composing the unit carrier row signal D8 as shown in FIG. 13. The width of the unit carrier wave D7 is about 6 ns as obvious from FIG. 13. When the waveform of FIG. 13 is checked against the waveform of FIG. 14, the normal unit carrier waves D7 appear as the largest waveforms (as shown by W1 in FIG. 14). It is understood that primary reflected waves W2 and secondary reflected waves W3 appear in the vicinity of the largest waveforms with time shift respectively. Furthermore, it is understood that a noise wave W4 superimposes over the whole voltage waveform. Moreover, it is understood that the unit carrier waves D7 can readily be distinguished from the reflected waves W2 and W3 and noise waves W4.

Furthermore, it is understood that when the time interval is equal to or more than 20 ns, amplitude levels of subsequent reflected waves are sufficiently deteriorated in the unit carrier waves D7 with the frequency of 550 MHz as in the embodiment (that is, about 3 to 4 m in consideration of reciprocation), as obvious from FIG. 14. In the case of the vehicle 10 with the general size, an identification code of 50 Mbps can be transmitted.

The present invention should not be limited to the foregoing embodiments. Modified forms as described below are within the technical scope of the invention. Furthermore, the invention can be practiced in modified forms other than those described below without departing from the gist of the invention.

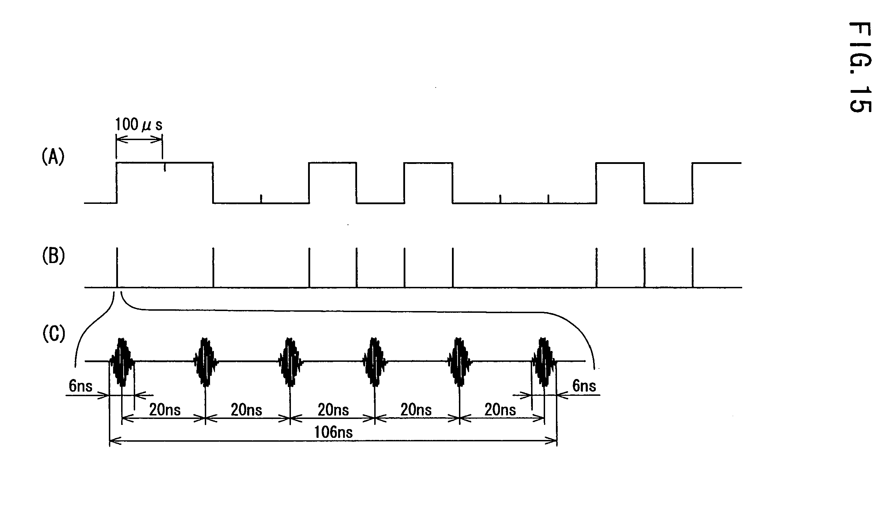

In the first embodiment, each transmission terminal 51 generates the identification pulse train D3, which is then amplitude-modulated so that the unit carrier row signal D8 is generated. However, as shown in FIG. 15, an identification wave output circuit may be provided for outputting a unit carrier row signal D8 specific to each transmission terminal 51. In this case, the identification wave output circuit is driven in synchronization with the binary inversion of digital transmission data D1 to output the unit carrier row signal D8.

The data communication systems 50, 50R are provided in the vehicle 10 in the first to third embodiments. However, the data communication system of the invention may be provided in a machine, equipment, etc. other than the vehicles.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A data communication system modulating and demodulating binary multibit, serial digital transmission data (D1) using a carrier wave and transmitting and receiving the data between a plurality of transmission terminals (51, 51R, 70, 70R) and a plurality of reception terminals (60, 60R, 70, 70R), **characterized in that** each transmission terminal (51, 51R, 70, 70R) includes:
a terminal identification information adding unit (54, 56) for generating a unit carrier wave (D7) including a plurality of periods of the carrier and arranging the unit carrier wave (D7) in arrangement patterns differing at every transmission terminal (51, 51R, 70, 70R) to generate a unit carrier row signal (D8) shorter than one bit of the digital transmission data; and
a transmission timing determination unit (53) for detecting a binary inversion timing of the digital transmission data (D1) and causing the terminal identification information adding unit (54, 56) to transmit the unit carrier row signal (D8) every time the binary is inverted, and each reception terminal (60, 60R, 70, 70R) includes:
a reception timing distinguishing unit (64 to 66) for generating a reception timing signal (D9) in synchronization with reception of the unit carrier row signal (D8) and collecting the reception timing signal (D9) of the unit carrier row signal (D8) of the same type; and
a digital data restoring unit (67) for inverting the binary according to the collected reception timing signal (D9), thereby restoring the digital transmission data (D1).

2. The data communication system according to claim 1, further **characterized by**:
an identification pulse generating unit provided on the terminal identification information adding unit (54, 56) for arranging pulses according to a predetermined terminal identification code (D4), thereby generating an identification pulse train (D3);
an amplitude modulator (56) provided on the terminal identification information adding unit (54, 56) for amplitude-modulating the identification pulse train (D3) into the unit carrier row signal (D8); and
an amplitude demodulator (63) provided in each reception timing distinguishing unit (64 to 66) for amplitude-demodulating the unit carrier row signal (D8) into the identification pulse train (D3).

3. The data communication system according to claim 1 or 2, wherein the transmission terminals (51, 51R, 70, 70R) and the reception terminals (60, 60R, 70, 70R) are mounted in a vehicle (10), and in the terminal identification information adding unit (54, 56), each unit carrier wave (D7) has a length which is less than 20 ns and an interval between the unit carrier waves (D7) is not less than 20 ns.

4. The data communication system according to any one of claims 1 to 3, wherein the transmission terminals (51, 51R, 70, 70R) and the reception terminals (60, 60R, 70, 70R) are mounted in a vehicle (10) including an engine (12), a chassis (11), a plurality of tires (15), the system further comprising:
a vehicle ground (GND) including the engine (12) and the chassis (11) and insulated from the ground (100) by the tires (15);
a transmission side opposed conductive member (51T) provided in the transmission terminal (51R) so as to be opposed to the vehicle ground (GND); and
a reception side opposed conductive member (60T) provided in the reception terminal (60R) so as to be opposed to the vehicle ground (GND), wherein:
the transmission terminal (51R) applies voltage between the transmission side opposed conductive member (51T) and the vehicle ground (GND) and changes the voltage according to information to be transmitted, thereby changing an electric field produced over a whole surface of the vehicle ground (GND) ; and
the reception terminal (60R) receives the information based on a change in potential difference between the vehicle ground (GND) and the reception side opposed conductive member (60T).

5. The data communication system according to any one of claims 1 to 4, wherein:
the vehicle (10) includes a plurality of compartments (14A, 14B, 14C) each divided by a metal wall (14W), the compartments (14A, 14B, 14C) including an engine compartment (14A) and a passenger compartment (14B);
the transmission terminals (51R) and the reception terminal (60R) are disposed in the compartments (14A, 14B, 14C) and transmit and receive the digital transmission data by wireless signals; and
the compartments (14A, 14B, 14C) divided by the metal wall (14W) adjoin each other, the metal wall (14W) having a communication hole (14D) formed therethrough, the system further comprising a wireless relay terminal (73) inserted through the communication hole (14D) to relay the wireless signals between the compartments (14A, 14B, 14C) adjoining each other.

6. The data communication system according to any one of claims 1 to 5, wherein the transmission terminals (51, 51R, 70, 70R) and reception terminals (60, 60R, 70, 70R) transmit and receive the unit carrier row signals (D8) by a time sharing system (TSS).

7. A method of data communication for modulating and demodulating binary multibit, serial digital transmission data (D1) using a carrier and transmitting and receiving the data between a plurality of transmission terminals (51, 51R, 70, 70R) and a plurality of reception terminals (60, 60R, 70, 70R),
**characterized by**:
generating a unit carrier wave (D7) including a plurality of periods of the carrier wave by each of the transmission terminals (51, 51R, 70, 70R) and arranging the unit carrier wave in arrangement patterns differing at every transmission terminal (51, 51R, 70, 70R), thereby generating a unit carrier row signal (D8) shorter than one bit of the digital transmission data and transmitting the unit carrier row signal (D8) at every inversion of binary of the digital transmission data (D1); and
generating a reception timing signal (D9) by each of the reception terminals (60, 60R, 70, 70R) in synchronization with reception of the unit carrier row signal (D8), collecting the reception timing signal (D9) of the unit carrier row signal (D8) of the same type and inverting the binary according to the collected reception timing signal (D9), thereby restoring the digital transmission data (D1).

8. The data communication method according to claim 7, wherein the transmission terminals (51, 51R, 70, 70R) and the reception terminals (60, 60R, 70, 70R) are mounted in a vehicle (10), and in the terminal identification information adding unit (54, 56), each unit carrier wave (D7) has a length which is less than 20 ns and a spacing between the unit carrier waves (D7) is not less than 20 ns.

9. The data communication method according to claim 7 or 8, wherein:
the transmission terminals (51, 51R, 70, 70R) and the reception terminals (60, 60R, 70, 70R) are mounted in a vehicle (10) including an engine (12), a chassis (11), a plurality of tires (15);
a vehicle ground (GND) is provided which includes the engine (12) and the chassis (11) and is insulated from the ground (100) by the tires (15);
a transmission side opposed conductive member (51T) is provided in the transmission terminal (51R) so as to be opposed to the vehicle ground (GND);
a reception side opposed conductive member (60T) is provided in the reception terminal (60R) so as to be opposed to the vehicle ground (GND);
the transmission terminal (51R) applies voltage between the transmission side opposed conductive member (51T) and the vehicle ground (GND) and changes the voltage according to information to be transmitted, thereby changing an electric field produced over a whole surface of the vehicle ground (GND) ; and
the reception terminal (60R) receives the information based on a change in potential difference between the vehicle ground (GND) and the reception side opposed conductive member (60T).

10. The data communication method according to any one of claims 7 to 9, wherein:
the transmission terminals (51, 51R, 70, 70R) and the reception terminals (60, 60R, 70, 70R) are mounted in a vehicle (10) and the vehicle (10) includes a power supply line (23);
the vehicle (10) is provided with a direct current power supply circuit (17) having a positive and a negative output terminals;
one of the output terminals is connected to a vehicle ground (GND) including an engine (12) and a chassis (11) and other conductive members all of which are electrically conductive;
the other of the output terminals is connected to the power supply line (23); and
the unit carrier waves (D7) are applied as voltage signals between the power supply line (23) and the vehicle ground (GND) so that the unit carrier waves (D7) propagating on the power line are transmitted and received.
